(19) Europäisches Patentamt
European Patent Office
Office européen des brevets

(11) **EP 4 782 400 A1**

(12) **EUROPEAN PATENT APPLICATION**

(43) Date of publication:
**29.07.2026 Bulletin 2026/31**

(21) Application number: **25153867.4**

(22) Date of filing: **24.01.2025**

(51) International Patent Classification (IPC):
**C01B 32/25** $^{(2017.01)}$     **C01B 32/26** $^{(2017.01)}$
**B01J 3/08** $^{(2006.01)}$

(52) Cooperative Patent Classification (CPC):
**C01B 32/25; B01J 3/062; C01B 32/26;** B01J 3/08;
B01J 2203/0655

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **OZM Research s.r.o.
538 62 Hrochuv Tynec (CZ)**

(72) Inventors:
• **Krupka, Miloslav
538 62 Hrochuv Tynec (CZ)**
• **Mitev, Dimitar Petrov
538 62 Hrochuv Tynec (CZ)**

(74) Representative: **Harber IP s.r.o.
Dukelskych hrdinu 567/52
17000 Praha 7 (CZ)**

(54) **METHOD FOR DETONATION SYNTHESIS OF SIZE-TUNED SYNTHETIC DIAMONDS**

(57)     The present invention relates to a method for detonation synthesis of diamond particles, which comprises the steps of i) providing a detonable liquid-based mixture, comprising at least one explosive and at least one non-explosive organic compound, wherein the mixture is stoichiometrically adjusted to have a negative oxygen balance; and wherein said detonable liquid-based mixture is selected from a detonable solution, and a detonable suspension; ii) detonating said detonable liquid-based mixture in a processing container; iii) separating the diamond product.

EP 4 782 400 A1

**Description**

<u>Technical Field</u>

The technical area of the present invention relates to the synthesis of artificial diamond particles. In particular, it relates to the production method of diamond nano- and submicron-size particles by a dynamic shockwave compression, where the mean size of the produced particles can be precisely controlled and well defined through detonation conversion of liquid-based detonable solutions and suspensions.

<u>Background Art</u>

Nowadays, all the production methods of small sub-4 nm nanodiamonds or big super-7 nm nanodiamonds do not rely directly on detonation technology. The known approaches are based on annealing of CVD (chemical vapour deposition) or HPHT (High Pressure High Temperature) diamond fractions, conversion of adamantane precursors, or graphite by laser ablation. The annealing of standard 5 nm detonation nanodiamond at temperatures over 500 °C can bring the size reduction down to 1.4 nm, following a complex secondary procedure though (Stehlik, S., Varga, M., Ledinsky, M. et al. High-yield fabrication and properties of 1.4 nm nanodiamonds with narrow size distribution, 2016, Scientific Reports, 6, 38419, https://doi.org/10.1038/srep38419).

A method for partial production of sub-3 nm nanodiamonds is known (V. Pichot, B. Risse, F. Schnell et al., Understanding ultrafine nanodiamond formation using nanostructured explosives, Scientific Reports, 2013, 3, 2159, https://doi.org/10.1038/srep02159; WO2013127967A1), where nanostructured (particle sizes between 50 and 200 nm) RDX (cyclotrimethylenetrinitramine, also called hexogen) and TNT (trinitrotoluene) explosives are mixed, pressed to form solid charges and blasted in detonation chamber. Such nanodiamonds have mean particle diameter of 4.2 nm, where the fraction having a real size of below 3 nm is only under 20 %. When standard micro-structured charge is used (particle sizes between 5 and 100 $\mu$m), the mean particle diameter of the particles is 6.3 nm, with fraction below 3 nm only 4 %.

Developments for reliable detonation synthesis of nanodiamond with mean particle size in the range of from 7 to 11 nm are currently still lacking. The method disclosed in EP 3150552 A1 describes production of carbon nanoparticles containing diamond and graphite carbon, by a detonation method, wherein a liquid explosive is disposed in a periphery of a solid explosive material, and a detonation reaction is performed. The peripheral liquid layer may comprise a mixture formed of hydrazine with hydrazine nitrate, hydrazine and ammonium nitrate, a mixture of hydrazine and nitromethane, or nitromethane. The majority of these outer mixtures are inorganic and do not contain carbon, so they cannot directly contribute to the nanodiamond synthesis. EP 3150552 A1 discloses images of two diamond nanoparticles with diameters 4.1 and 9.5 nm, without further data on the mean size distribution though. This is a standard situation for all current schemes for synthesis of detonation nanodiamond: individual smaller or larger single particles can be registered, but the mean particle size is typically situated in the range of from 4 to 7 nm.

Submicron and micron sized polycrystalline diamond products can be produced nowadays by either crushing and fractionation of natural and artificial diamond crystals, by HPHT press synthesis, or by using indirect or direct impact of solid explosives. The main detonation technology for production of micron and submicron diamond fractions is based on so called 'ampoule method'. There the carbon precursors (rhombohedral graphite or carbon black, mixed with metal powders) are pressed into big metal containers, subjected to shockwave compression by up to tons of explosives, then further released and converted material is crushed, acid-cleaned, fractionated by sedimentation and eventually dried. It is a typical cumbersome and slow top-down process, which provides mainly fractions of particle size between 0.25 and 50-60 $\mu$m. Another method uses powdered high explosives (typically RDX) mixed with graphite or soot, then the mixtures are pressed to solid charges, and finally blasted in detonation chamber. This method produces polycrystalline diamonds of intermediate sizes with a very broad particle size distribution (quoted ranges of between 0.05-0.1, 0.3-1, 0.05-2, 1-3 and 0.3-16 $\mu$m).

<u>Disclosure of the Invention</u>

*Technical Problem*

None of the above-described production methods allows for specific tuning of the mean nanodiamond particle sizes exclusively towards the range of 1 to 3.5 nm, or towards the range of 7 to 11 nm, by using direct explosive approaches.

The prospective applications of the nanodiamonds, in particular for drug delivery and applications as composite ingredients, can benefit significantly from their 1 to 3.5 nm sizes. Smaller diameter implies a larger specific surface area per unit of mass, thus higher loading capacity for the drug vehicles in medicine, or stronger surface-induced impact over the composite properties. For the biomedical use, the smaller size eases the removal and excretion of these diamond particles from the cells and therefore reduces their toxicity.

On the other side, the nanodiamonds with mean size between 7 to 11 nm form a group of fine polishing abrasives, which reliable detonation synthesis can facilitate their cost-effective production and industrial application.

The submicron and micron polycrystalline diamonds (mean particles size is in the range of from 0.1 to about 100 $\mu$m) are significantly larger and have lower specific surface area than the nanocrystalline diamond (mean particles size is in the range of 1 to 100 nm). On account of that, the bulk (core) properties of these particles are much more pronounced, which is ideal for applications as middle-size abrasives.

The major drawback of all the currently employed schemes for detonation diamond synthesis is the absence of a direct bottom-up explosive approach able to output controllably varied well-defined diamond fractions, without the need of further elaborate separation processing.

The need for manufacturing processes capable of providing such narrow size ranges of diamonds, better tunability and better yields with regard to specific fractions of detonation nano- and submicron diamond, thus remains. The present invention provides a solution to the aforementioned problems by disclosing a method of fine tuning of the synthetic diamond size and properties by use of liquid-based explosive compositions.

*Solution to the Technical Problem*

The present invention relates to a method of detonation conversion of liquid-based solutions and suspensions, comprising explosives and organic non-explosive compounds as an additional source of carbon, or mixtures thereof, wherein at least one of the components itself is an explosive. Under the thermodynamic conditions of a sufficiently powerful detonation process (pressures above 12 GPa and temperatures above 3000 K), and under overall negative oxygen balance, the free carbon released from the organic compounds condenses and forms diamond particles during the cooling of the reaction products. The object of the present invention is thus a method for manufacturing diamond particles by detonation.

The importance lies in that the detonation reaction is entirely based on liquid-based explosive solution or suspension. The application of explosive solutions in liquid form provides the highest possible miscibility down to the molecular level and is thus superior to the solid nano- and micron-size explosive mixtures. As a result, a reliable synthesis of smallest possible nanodiamond particles and products on their basis becomes feasible. Upon application of liquid-based explosive suspensions, the wettability of the liquids ensures better contact and better penetration of the liquid components in the small pores and open cavities of the dispersed solid-phase ingredients. All these in turn, besides being prerequisites for a better phase transition to diamond-type carbon, by varying the ratios and parameters of the solution and suspension also render possible the tuning of the particle size of the detonation diamond. In contrast, pressed solid charges are very difficult to manufacture from fine components; they lack close contact between the constituent particles and often contain voids. Another known imperfection of cast solid charges is the formation of large macroscopic crystals during solidification.

The object of the present invention is thus a method for manufacturing diamond particles by detonation. Said method contains the following steps:

> i) providing a detonable liquid-based mixture, comprising at least one explosive and at least one non-explosive organic compound, wherein the mixture is stoichiometrically adjusted to have a negative oxygen balance; and wherein said detonable liquid-based mixture is selected from a detonable solution, and a detonable suspension;
> ii) detonating said detonable liquid-based mixture in a processing container;
> iii) separating the diamond product.

In general, the method according to this invention is performed by placing a detonable liquid-based explosive solution or suspension together with an electric or non-electric shocktube-driven detonator, optionally enhanced with a booster, in a hermetic sleeve (e.g. polyethylene sleeve) and sealed. The sealed sleeve may then be immersed in a receptacle filled with a reactive liquid, in liquid or frozen form, and detonated in a processing metal container. The solid detonation products are sedimented, filtered and dried, optionally followed by a chemical purification, using e.g. perchloric acid.

In some embodiments, the detonable liquid-based explosive may contain a suspended elemental additive, having particle size in the range of from 1 nm to 1000 $\mu$m, preferably from 100 nm to 50 $\mu$m. (In the context of this invention, the reference method of measurement of particle sizes between 1 and 50 nm is BET, the reference method for measurement of particle sizes between 50 nm and 1 $\mu$m is SEM, and the reference method for measurement of particle sizes between 1 and 1000 $\mu$m is optical microscopy. The mean BET particle size in nm is calculated from the specific surface area of the diamond samples, determined using BET, by the following equation: 6000 / ((BET surface area in m$^2$/g) x (diamond density of 3.52 g/cm$^3$)), assuming the non-porous spherical model is used). BET surface area measurement was performed using nitrogen gas as the adsorbent. The elemental additive can be selected from the group of B, Si, Ge, P, S, Ga, Ge, As, Se, In, Sn, Sb and/or Te. In some embodiments the elemental additive may be placed only outside of the sealed sleeve with detonable liquid-based explosive, in the way that prior to immersing in the reactive liquid, the additive is placed and sealed in a second hermetic sleeve, distributed evenly between the two sleeves. The hermetic sleeves can be made of e.g. polyethylene.

The reactive liquid may be selected from a group comprising aqueous solutions of carboxylic acids containing from 2 to 5 carbon atoms, preferably acetic acid (more preferably 0.1 to 5 wt. % aqueous solution), propionic acid (more preferably 0.1 to 5 wt. % aqueous solution), lactic acid (more preferably 0.1 to 5 wt. % aqueous solution), or citric acid (more preferably 0.1 to 5 wt. % aqueous solution).

The booster may be e.g. plastic explosive.

The detonable liquid-based solution or suspension contains at least one explosive and at least one organic non-explosive compound in a stoichiometric ratio, in which the oxygen balance, needed for full carbon oxidation, is negative, preferably the oxygen balance is lower than -40 %, more preferably lower than -45 %, most preferably in the range of from -45 % to -70 %. The explosive compounds, usable in the method according to this invention, can be solid or liquid, soluble in non-polar or polar solvents, and can be used as solvents of the other components (e.g. of the organic non-explosive compound). The organic non-explosive compounds, usable in the method according to this invention, can be solid or liquid, soluble in liquid or melted explosives with various polarity, and can be used as solvents of the other components (e.g. of the explosives).

In this invention, suspensions are defined as consisting of solid phase dispersed in a liquid. Suspensions with particle size from 1 nm to 1000 nm are referred to as colloidal suspensions, suspensions with particle size from 1 μm to 100 μm are referred to as standard suspensions, and suspensions with particle size from 100 μm to 1000 μm are referred to as suspension slurries. The content of the liquid in the suspension should be sufficient to at least wet all the particles of the solid phase (this invention covers also the dense suspensions in paste and slurry form); thus, it should cover the particle surface area, prevent the interparticle voids and support the dispersion. Preferably, the liquid content in the suspension is at least 20 wt. %, based on the total weight of the suspension, more preferably at least 25 wt. %, even more preferably at least 30 wt. %.

The oxygen balance (OB) indicates, whether an explosive mixture contains enough oxygen to fully oxidize the carbon atoms in the explosive mixture (fully oxidized carbon forms carbon dioxide). A negative oxygen balance means that the compound or mixture contains less oxygen than is needed for full carbon oxidation, and can thus undergo only incomplete combustion. Oxygen balance in % can be calculated as the number of moles of oxygen that are deficient for 100 grams of the explosive, using the following equation:

$$OB\% = (-1600 / MW) * (2X + (Y/2) + M - Z),$$

where X = number of atoms of carbon, Y = number of atoms of hydrogen, Z = number of atoms of oxygen, and M = number of atoms of metal oxide produced (if any). For mixtures a common formula is taken, based on molar participation of the elements.

The method according to the present invention overcomes the disadvantages of the prior art and presents a method for a fast, reliable and tunable one-step synthesis of nanodiamonds with well-defined mean particle size distribution within the extended range of from 1 to 11 nm, and better specific product yields. The crystallinity of the produced nanodiamond powders can also be regulated for the smaller particles in the range of from 1 to 3.5 nm. With application of controlled liquid-based mixtures it is now possible to produce both small enough monocrystalline nanodiamond products, where the mean size of the core nano crystallites overlaps the theoretical maximum of the common particle size, and also polycrystalline nanodiamond products, where the core nano crystallites are several times smaller than the common particle size (individual crystallites measured by the method of X-ray diffraction (XRD).

In another aspect of the present invention, the claimed method allows for the synthesis of larger and still well size-defined polycrystalline diamond fractions (within the higher nano to sub-micron range between 11 and 999 nm, which is achieved and controlled by graphite / soot addition into the liquid-based reaction mixtures.

In both aspects, the method is straightforward, simple to implement into practice, low-cost and easily scalable.

In the aspect of this invention, the regulation of the size of the detonation diamonds, synthesized by use of liquid-based explosive solution or suspension, occurs thus based on either of the following factors, alone or together. Reduced size is achieved by: highest possible miscibility of the explosive down to the molecular level (fully liquid detonable mixtures and fine liquid-based detonable suspensions); regulation of the thermodynamic conditions of the detonation process around the previously mentioned lower threshold of pressures above 12 GPa and temperatures above 3000 K, in particular with variation of the content and proportions of the liquid-based detonable mixture; application of organic non-explosive compounds with varied oxygen content. Increased size is achieved by: regulation of the thermodynamic conditions of the detonation process well above the previously mentioned lower threshold, in particular with variation of the content and proportions of the liquid-based detonable mixture; application suspensions of powerful solid explosives and non-explosive compounds with increased particle size; application of organic non-explosive compounds with no or reduced oxygen content.

The method for detonation synthesis of diamond particles according to the present invention, wherein the diamond particles have a pre-determined size range, comprises the steps of providing a detonable liquid-based mixture, comprising at least one explosive and at least one non-explosive organic compound, wherein the mixture is stoichiometrically adjusted to have a negative oxygen balance; and wherein said detonable liquid-based mixture is selected from a detonable solution, and a detonable suspension; determining from the above-listed factors for size regulation to produce diamond particles having a pre-determined size range; detonating said detonable liquid-based mixture in a processing container; and separating the diamond product.

The skilled person may determine the weight ratio of the contents of the detonable liquid-based mixture, as well as the particle size of the solid phase (if present in the mixture) based on the teaching provided in this application, in order to achieve the desired particle size of the resulting diamond product, knowing that a correlation exists, e.g., between the obtained particle size of the diamond product and the particle size of the solid phase of the detonable suspension (the smaller particle size of the suspension, the smaller and narrower size distribution is of the obtained diamond product). In one embodiment, small particle size of the suspension may be achieved by colloidal precipitation upon addition of antisolvents,

*Embodiments*

In one embodiment, the content of the explosive compounds in the detonable liquid-based solutions and suspensions is generally at least 50 wt%, preferably at least 70 wt%, more preferably at least 80 wt%, and yet more preferably 90 wt%, relative to the total mass of the detonable liquid-based solution or suspension. Preferably, the weight ratio of the explosive to non-explosive compound in said detonable liquid-based mixture is in the range of from 1: 1 to 9:1.

In one embodiment, the following solid explosives can be used in the claimed method: dinitrotoluene and trinitrotoluene (DNT and TNT), trinitronaphthalene, nitroguanidine, nitrourea, picric acid, ammonium picrate, trinitroanisole, trinitrobenzene (TNB), hexanitrodiphenylamine, trinitrophenylmethylnitramine, pentaerythritol tetranitrate (PETN), hexanitrostilbene (HNS), cyclotrimethylene trinitramine (RDX), nitrocellulose, cyclotetramethylene tetranitramine (HMX), dimethyl dinitrobutane (DMDB) and mixtures thereof.

In one embodiment, the following liquid explosives can be used in the claimed method: trinitroxypropane, nitromethane and tetranitromethane, methyl nitrate, ethyl nitrate, isopropyl nitrate, butanetriol trinitrate, ethylene glycol dinitrate, trimethylolpropane trinitrate and mixtures thereof, melted above-defined solid explosives, and their eutectic mixtures.

In one embodiment, the following solid organic non-explosive compounds can be used in the claimed method: polymethyl methacrylate, polystyrene, styrene-butadiene copolymer, nitrile butadiene copolymer, paraffin, stearin, bitumen, carbohydrates, carboxymethylcellulose, mononitrotoluene (MNT), naphthalene, nitronaphthalene and dinitronaphthalene, phenanthrene, anthracene, benzoic acid, benzophenone, melamine, and mixtures thereof.

In one embodiment, the following liquid non-explosive compounds can be used in the claimed method: ethylene glycol, diethylene glycol, acetonitrile, acetone, propylene carbonate, benzene, nitrobenzene, toluene, benzyl alcohol, glycerol, benzyl benzoate, phenyl benzoate, acetyltributylcitrate, isopentanol, triethyl citrate, tetraethylene glycol monooctyl ether, coal tar, petrol and wood tar, and mixtures thereof, melted solid non-explosive compounds defined above, and their eutectic mixtures.

In one preferred embodiment, the explosive is selected from the group comprising tetranitromethane, nitromethane, RDX, HMX, TNT, PETN and DNDB.

In one preferred embodiment, the non-explosive compounds are selected from the group comprising nitrobenzene, nitronaphtalene, acetyltributylcitrate, isopentanol, tetraethylene glycol monooctyl ether and MNT.

In one preferred embodiment, the detonable mixture is in the form of a liquid-based **solution,** containing at least one explosive, and at least one organic non-explosive ingredient. A suitable detonable combination of explosive and non-explosive compounds is selected such that all ingredients are liquid and completely miscible, or form a liquid solution between solid and liquid ingredients, or form a liquid eutectic mixture between two or more solid or melted ingredients. Preferably, the detonable liquid-based solution is selected from the group comprising solutions of nitrobenzene and nitronaphthalene or dinitronaphthalene in tetranitromethane; nitroglycerine in nitromethane and nitrobenzene; TNT and RDX in nitrobenzene at temperatures over 50 °C; nitrocellulose and ethylene diamine in nitromethane; eutectics of TNB, trinitrophenylmethylnitramine and MNT at temperatures over 67 °C; PETN and TNT in acetone; RDX and TNT in acetone.

In all embodiments describing liquid-based detonable solutions the applicable temperature range is not limited, unless it is out of the zones of thermal stability of the ingredients, and unless it is out of their zone of liquid aggregate state.

In one preferred embodiment, the detonable mixture is in the form of a liquid-based **suspension,** wherein the explosive material is finely suspended in a non-explosive organic liquid or solution, or in a mixture of explosive and non-explosive liquids or solutions. An example of such embodiments is the dispersion of TNB and HMX in glycerol or triethyl citrate. Preferably, the particle size of the solid part of said detonable suspension is in the range of from 1 nm to 1000 $\mu$m,

more preferably from 20 nm to 500 $\mu$m, even more preferably from 60 nm to 200 $\mu$m.

In all embodiments describing liquid-based detonable suspensions the applicable temperature range is not limited, unless it is out of the zones of thermal stability of the ingredients, and unless it is out of their zone of suspension stability and aggregate state.

In one embodiment, the detonable mixture is in the form of a liquid-based **suspension,** wherein the non-explosive material is finely suspended in an explosive liquid or solution, or in a mixture of non-explosive and explosive liquids or solutions. Examples of such embodiments are the dispersions of melamine in nitromethane, or phenanthrene in mixture of isopropyl nitrate with nitroglycerin, produced within the concentration range described in the first embodiment. Preferably, the particle size of the solid part of said detonable suspension is in the range of from 1 nm to 1000 $\mu$m, more preferably from 20 nm to 500 $\mu$m, even more preferably from 60 nm to 200 $\mu$m.

The size variation of the produced detonation diamonds is firstly influenced by energetic parameters of the detonable liquid-based suspension, with usage of more or less powerful explosive materials. Secondly, by fine tuning the size range of the dispersed phase in the suspensions, additional specific volume patterning over the local detonation micro-conditions (P, T) within the detonation wave can be achieved; thus, from suspensions with identic mass composition, the synthesis of smaller or bigger detonation nanodiamonds is feasible. This possibility is realized by colloidal precipitation of dissolved solid explosives upon addition of antisolvents. An example of suitable antisolvent is, e.g., addition of ethanol to saturated acetone solution of TNT (solubility of TNT in 95% ethanol is 18 mg/mL, in acetone 1560 mg/mL, both for the temperature of +30 °C). By addition of antisolvent with less solubility power, e.g., water (solubility of TNT 0.175 mg/mL at the same temperature), the output is finer explosive colloidal suspension (down to 0.065 $\mu$m vs. 0.950 $\mu$m). The same is the approach towards the PETN, where the same combinations of solvent-antisolvent is used. The same approach is valid for the colloidal precipitation of dissolved solid non-explosive compounds. For same fast mixing is and constant temperature, the rate of precipitation is proportional to the antisolvent addition speed and the antisolvent concentration, where higher values result in smaller colloidal particles and vice versa. On the other side, the suspension media itself can additionally dissolve explosive or non-explosive components, and thus provide more degrees of freedom to vary the size, hetero-elemental inclusions and surface properties of the synthesized detonation diamonds.

In one embodiment, the detonable liquid-based mixture is a suspension, and the dispersed solid phase has particle size in the range of from 1 nm to 250 $\mu$m, which leads to the obtained mean particle size of the nanodiamond product in the range of from 1 nm to 11 nm.

In some preferred embodiments, the detonable liquid-based mixture in the method according to the present invention further comprises graphite and/or soot in an amount in the range of from 0.001 to 25 wt%, based on the total mass of the detonable mixture. In the cases when graphite and/or soot are present in detonable liquid-based mixtures enriched with nitroaromatic compounds, simultaneous synthesis occurs of both of detonation nanodiamonds with mean particle size in the range from 1 to 11 nm and detonation sub-micron diamonds wherein their mean particle size is in the said higher range of 11 to 999 nm. Finer graphite precursor particles (in the range of 20 to 50 $\mu$m) enabled up to 20% higher graphite / soot to diamond conversion ratio, than the bigger precursor particles. Under above described tunability variations, such suspensions output controllable blend of well-defined submicron and/or nanosized diamond fractions, separable by sedimentation.

In one preferred embodiment, fine tuning of the diamond charge-carrying properties is possible by modification of particles *in-situ* during the detonation synthesis step, through elemental additives selected from B, Si, P, S, Ga, Ge, As, Se, In, Sn, Sb and/or Te, wherein the modification occurs due to additions of the said pure elements into the detonable liquid-based mixture, or due to plasma-sputtered coatings of said pure elements over the explosive particles used in liquid detonable suspensions, or due to physical vapour deposition of the said pure elements over the explosive particles used in liquid detonable suspensions. The optimal amount of said elemental additives is preferably in the range of from 0.001 to 5 wt% of the total mass of the detonable mixture.

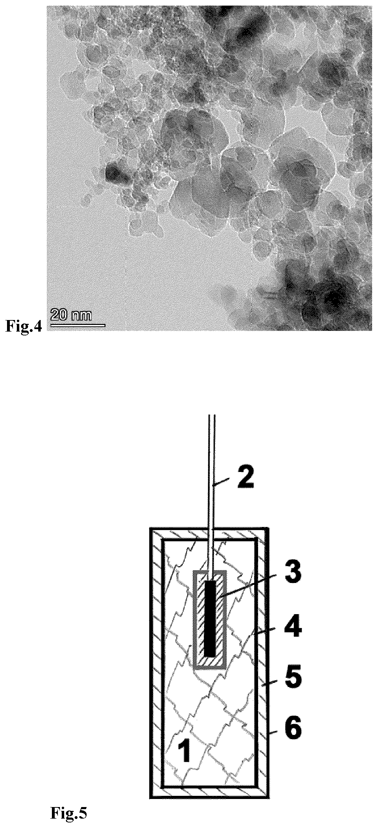

In one preferred embodiment, the elemental additives selected from B, Si, P, S, Ga, Ge, As, Se, In, Sn, Sb and/or Te are deposited peripherally around the detonable liquid-based charges, unmixed with the detonable mixture **(Fig. 5).** Under this setup the elemental additive is limited mainly to the surfaces of the diamond particles, because the modifiers lay outside of the detonation zone and thus do not displace carbon atoms into the diamond latices. This particular case of the said modification brings the advantage of reversibility: the induced elemental effects are controllable under subsequent chemical and thermo-chemical treatments.

Some undesired hetero-elemental admixtures, originating from the process reagents or from metallic parts of the used equipment, can influence the chemical properties of the final diamond products. In one preferable embodiment, a reduction or tuning of these surface modifiers can be successfully implemented *in-situ* during the detonation synthesis. The application of reactive liquids, based on solutions of mild organic acids (acetic, propionic, lactic or citric) and surrounding the used charges, results in up to 22-fold decrease of total hetero-elemental content, according to control measurement in form of mass reduction of incombustible residue. Further reduction of unwanted hetero-elemental admixtures is achieved through an exclusion of gasses, comprising free oxygen into the processing containers and other parts of the used metallic equipment, which eliminates the appearance of unwanted metal oxides and hydroxides. This is performed either by: a) performing initial propane-air explosion inside the container with aim of binding the available oxygen; b) by rinsing the work metal container with nitrogen, carbon dioxide or inert gasses; or c) by keeping the exhaust detonation gasses, already low in oxygen content, inside the container as a working atmosphere for the next detonations.

After the detonation synthesis, the final separation of diamond from non-diamond component in the solid carbon residues occurs using standard oxidative chemical and thermo-chemical treatment of oxidizable carbon and organic components, by acid dissolutions of the non-oxidizable admixtures (metals and metal compounds, silicates etc.), and by sedimentation processes.

Brief Description of the Drawings

**Fig. 1** HRTEM: size and morphology of monocrystalline detonation nanodiamond with mean particle size 2.55 nm (by BET) and crystallite size 1.99 nm (by XRD), synthesized according to Example 1 of this invention

**Fig. 2** HRTEM: size and morphology of polycrystalline detonation nanodiamond with mean particle size 5.91 nm (by BET) and crystallite size 3.27 nm (by XRD), synthesized according to modified Example 2 of this invention. The upsize tuning of the nanodiamond particles was achieved through an increase of the mean size of the cyclotrimethylene trinitramine suspension, from 45 $\mu$m to 93 $\mu$m

**Fig. 3** XRD diffraction pattern of polycrystalline detonation nanodiamond with mean particle size 10.87 nm (by BET) and crystallite size 3.32 nm (by XRD), synthesized according to modified Example 3 of this invention. The peaks overlap the diffraction angles of the diamond crystal planes (1,1,1), (2,2,0) and (3,1,1), according to the standard card JCP: 03-065-6329 (the vertical lines)

**Fig. 4** HRTEM: mixed particle distribution, typical for liquid-based explosives with graphite or soot addition, synthesized according to modified Example 4 of this invention

**Fig. 5** Construction of the charge with peripherally distributed elemental additive: 1- detonable solution or suspension; 2- electric or non-electric detonator; 3- booster; 4- inner polyethylene sleeve; 5- layer of elemental additive; 6- outer polyethylene sleeve

Examples

Example 1.

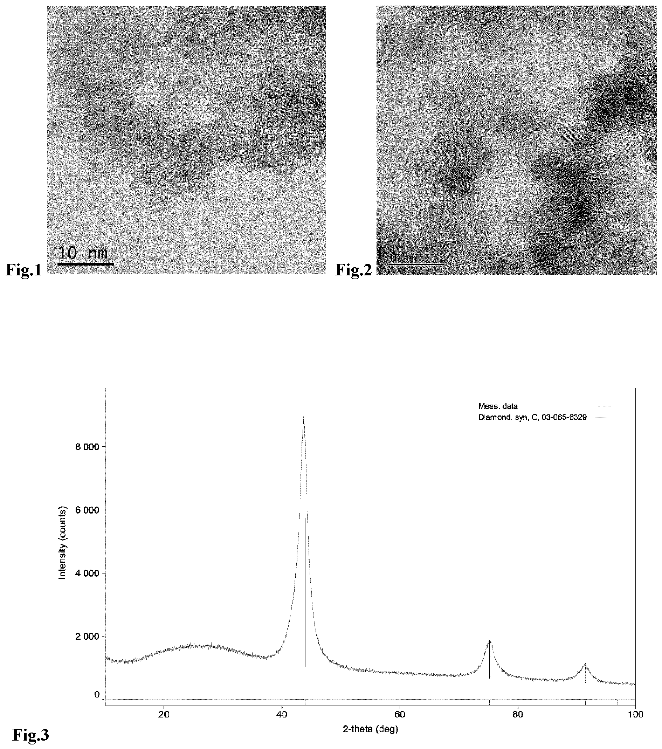

Detonable solution with oxygen balance -47.6% was created from 56.3 wt% tetranitromethane, 32.1 wt% nitrobenzene, 11.2 wt% nitronaphthalene and 0.4 wt% MNT. 500 g of the solution, fitted with non-electric detonator were sealed in hermetic polyethylene sleeve, immersed in a bag full with 4 kg 5 wt% acetic acid solution as a reactive liquid, and detonated in a processing metal container. The solid reaction products were sedimented, dried and a total yield of 60.1 g was measured, with 20.0 g nanodiamond content (33.2%). Brunauer-Emmett-Teller (BET) specific surface area analysis of the purified (with perchloric acid) nanodiamond powder determined 670 $m^2 g^{-1}$, corresponding to mean BET particle size of 2.54 nm. The size of the individual crystallites according to the X-ray diffraction (XRD) was 1.99 nm, which confirmed the monocrystalline nature of the product **(Fig. 1).**

Example 2.

Detonable suspension with oxygen balance -59.5 % was created from 78.0 wt% RDX (mean particle size of 45 $\mu$m (optical microscopy)), 20.5 wt% acetyltributylcitrate and 1.5 wt% MNT (mean particle size of 98 $\mu$m (optical microscopy)). 500 g of the suspension, fitted with electric detonator were sealed in hermetic polyethylene sleeve, immersed in a bag full with 4 kg 5 wt% propionic acid solution as a reactive liquid, and detonated in a processing metal container. The solid reaction products were sedimented, dried and a total yield of 92.8 g was measured, with 28.3 g nanodiamond content after purification (30.5%). BET specific surface area analysis of the purified (with perchloric acid) nanodiamond powder determined 488 $m^2 g^{-1}$, corresponding to mean BET particle size of 3.49 nm. The size of the individual crystallites according to the XRD was 1.86 nm, which confirmed the polycrystalline nature of the product **(Fig. 2).**

Example 3.

Detonable suspension with oxygen balance -57.5 % was created from 85 wt% HMX (mean particle size of 143 $\mu$m, optical microscopy), 13.8 wt% isopentanol and 1.2 wt% DMDB (mean particle size of 177 $\mu$m, optical microscopy). 500 g of the suspension, fitted with non-electric detonator were sealed in hermetic polyethylene sleeve, immersed in a bag full with 4 kg 5 wt% acetic acid solution as a reactive liquid, and detonated in a processing metal container. The solid reaction products were sedimented, dried and a total yield of 96.1 g was measured, with 34.7 g nanodiamond content after purification (with perchloric acid) nanodiamond powder determined 157 $m^2 g^{-1}$, corresponding to mean BET particle size of 10.87 nm. The size of the individual crystallites according to the XRD was 3.32 nm, which confirmed the polycrystalline nature of the product **(Fig. 3).**

Example 4.

Detonable suspension was created from 63.2 wt% PETN and 4.6 wt% TNT (both mean particle size of 105 $\mu$m, optical microscopy), 18.7 wt% nitrobenzene, 3.5 wt% nitromethane, 2.8 wt% MNT (mean particle size of 98 $\mu$m, optical microscopy) and 7.2 wt% graphite powder (DLS d90 56 $\mu$m, optical microscopy). The oxygen balance of the suspension was -50.1 % (without graphite). 1000 g of the suspension, fitted with electric detonator and 10 g plastic explosive booster were sealed in hermetic polyethylene sleeve, immersed in a bag full with 8 kg 5 wt% lactic acid solution as a reactive liquid, and detonated in a processing metal container. The solid reaction products were sedimented, dried and a total yield of 101.6 g was measured, with 63.1 g mixed micro- and nanodiamond content after purification with perchloric acid (62.1%). BET specific surface area analysis of the purified nanodiamond powder determined 58 $m^2 g^{-1}$, corresponding to mean BET particle size of 29.26 nm. The size of the individual crystallites according to the XRD was 3.12 nm, which confirmed the polycrystalline nature of the product. After a sedimentation procedure, approximately 80.1% of the detonation diamonds separated in submicron fraction with mean BET specific surface area of 14.7 $m^2 g^{-1}$, corresponding to mean BET particle size of 115.96 nm **(Fig. 4).**

Example 5.

Detonable suspension was created from 71.9 wt% PETN (mean particle size of 122 $\mu$m, optical microscopy), 17.2 wt% tetraethylene glycol monooctyl ether, 10.5 wt% MNT (mean particle size of 98 $\mu$m, optical microscopy) and 0.4% boron nano-powder (mean particle size of 100 nm, SEM). The oxygen balance of the suspension was -66.4 % (without boron). 1000 g of the suspension, fitted with non-electric detonator and 10 g plastic explosive booster were sealed in hermetic polyethylene sleeve, immersed in a bag full with 8 kg 5 wt% citric acid solution as a reactive liquid, and detonated in a processing steel metal container. The solid reaction products were sedimented, dried and a total yield of 178.0 g was measured, with 38.6 g nanodiamond content after purification with perchloric acid (21.7%). BET specific surface area analysis of the purified nanodiamond powder determined 253 $m^2 g^{-1}$, corresponding to mean BET particle size of 6.74 nm. The size of the individual crystallites according to the XRD was 3.17 nm, which confirmed the polycrystalline nature of the product. In comparison with blank sample, synthesized without boron addition, the boron content of the manufactured nanodiamond sample increased with 76 $\mu$g $g^{-1}$ in dry state (analysed by ICP-MS).

Example 6.

Detonable suspension with oxygen balance -66.4 % was created from 72.2 wt% PETN (mean particle size of 122 $\mu$m, optical microscopy), 17.3 wt% tetraethylene glycol monooctyl ether, and 10.5 wt% MNT (mean particle size of 98 $\mu$m, optical microscopy). 1000 g of the suspension, fitted with non-electric detonator and 10 g plastic explosive booster were sealed in hermetic polyethylene sleeve. 20 g of boron nano-powder (mean particle size of 100 nm, SEM) were evenly distributed peripherally around the formed explosive charge, and sealed in second hermetic polyethylene sleeve **(Fig.5).** The charge was then immersed in a bag full with 8 kg 5 wt% citric acid solution as a reactive liquid, and detonated in a processing steel metal container. The solid reaction products were sedimented, dried and after the removal of residual boron through fusion with potassium persulfate, a total yield of 181.3 g was measured, with 40.1 g nanodiamond content after purification with perchloric acid (22.1%). BET specific surface area analysis of the purified nanodiamond powder determined 258 $m^2 g^{-1}$, corresponding to mean BET particle size of 6.61 nm. The size of the individual crystallites according to the XRD was 3.15 nm, which confirmed the polycrystalline nature of the product. In comparison with blank sample, synthesized without boron addition, the boron content of the manufactured nanodiamond sample increased with 11 $\mu$g $g^{-1}$ in dry state (analysed by ICP-MS).

Example 7.

An experiment was conducted identically to the previous Example 6 with the difference that the charge was immersed in a bag full with 8 kg deionized water, instead of the previously used 5 wt% citric acid solution as a reactive liquid. After the detonation in the same processing steel metal container, the separated raw carbon blend was ashed in a comparative experiment through heating at 550 °C in air atmosphere for 5.5 hours. The incombustible residue for the sample detonated in reactive liquid (Example 6) showed 21.9 times lower mass than the sample detonated in deionized water (Example 7), showing that the presence of the reactive liquid reduces the undesired hetero-elemental admixtures in the final product.

**Claims**

1. A method for detonation synthesis of diamond particles, **characterized in that** it comprises the following steps:

    i) providing a detonable liquid-based mixture, comprising at least one explosive and at least one non-explosive organic compound, wherein the mixture is stoichiometrically adjusted to have a negative oxygen balance; and wherein said detonable liquid-based mixture is selected from a detonable solution, and a detonable suspension;
    ii) detonating said detonable liquid-based mixture in a processing container;
    iii) separating the diamond product.

2. The method according to claim 1, **wherein** the content of the explosive compounds in the detonable liquid-based mixture is at least 50 wt%, relative to the total mass of the detonable liquid-based mixture.

3. The method according to claim 1 or 2, **wherein** the weight ratio of the explosive to non-explosive compound in said detonable liquid-based mixture is in the range of from 1:1 to 9:1.

4. The method according to claim 1, 2 or 3, **wherein** the detonable liquid-based mixture is a solution, consisting of at least one explosive and at least one organic non-explosive compound; wherein said explosive is selected from the group comprising dinitrotoluene and trinitrotoluene, trinitronaphthalene, nitroguanidine, nitrourea, picric acid, ammonium picrate, trinitroanisole, trinitrobenzene, hexanitrodiphenylamine, trinitrophenylmethylnitramine, pentaerythritol tetranitrate, hexanitrostilbene, cyclotrimethylene trinitramine, nitrocellulose, cyclotetramethylene tetranitramine, dimethyl dinitrobutane, diethanolnitramine dinitrate, trinitroxypropane, nitromethane and tetranitromethane, methyl nitrate, ethyl nitrate, isopropyl nitrate, butanetriol trinitrate, ethylene glycol dinitrate, trimethylolpropane trinitrate, and mixtures, eutectic mixtures and melts thereof;
   and wherein said organic non-explosive compound is selected from the group comprising ethylene glycol, diethylene glycol, acetonitrile, acetone, propylene carbonate, benzene, toluene, nitrobenzene, benzyl alcohol, glycerol, benzyl benzoate, phenyl benzoate, acetyltributylcitrate, isopentanol, triethyl citrate, tetraethylene glycol monooctyl ether, naphthalene, phenanthrene, anthracene, benzoic acid, benzophenone, melamine, paraffin, stearin, bitumen, carbohydrates, mononitrotoluene, nitronaphthalene and dinitronaphthalene, soluble polymethyl methacrylate, soluble polystyrene, soluble styrene-butadiene copolymer, soluble nitrile butadiene copolymer, coal tar, petrol and wood tar, and mixtures, eutectic mixtures and melts thereof.

5. The method according to claim 4, **wherein** the detonable liquid is selected from a solution of trinitrotoluene and cyclotrimethylene trinitramine in nitrobenzene; a solution of nitrocellulose and ethylene diamine in nitromethane; a solution of tetranitromethane, nitronaphthalene and monitrotoluene in nitrobenzene; a solution of pentaerythritol tetranitrate and trinitrotoluene in acetone; a solution of cyclotrimethylene trinitramine and trinitrotoluene in acetone.

6. The method according to claim 1, 2 or 3, **wherein** the detonable liquid-based mixture is a suspension, consisting of at least one solid explosive dispersed in at least one liquid organic non-explosive compound;

    wherein said solid explosive is selected from the group comprising dinitrotoluene and trinitrotoluene, trinitronaphthalene, nitroguanidine, nitrourea, picric acid, ammonium picrate, trinitroanisole, trinitrobenzene, hexanitrodiphenylamine, trinitrophenylmethylnitramine, pentaerythritol tetranitrate, hexanitrostilbene, cyclotrimethylene trinitramine, nitrocellulose, cyclotetramethylene tetranitramine, diethanolnitramine dinitrate, dimethyl dinitrobutane;
    and wherein said liquid organic non-explosive compound is selected from the group comprising ethylene glycol, diethylene glycol, acetonitrile, acetone, propylene carbonate, benzene, toluene, nitrobenzene, benzyl alcohol, glycerol, benzyl benzoate, phenyl benzoate, acetyltributyl citrate, isopentanol, triethyl citrate, tetraethylene glycol monooctyl ether, naphthalene, phenanthrene, anthracene, benzoic acid, benzophenone, melamine, paraffin, stearin, bitumen, carbohydrates, mononitrotoluene, nitronaphthalene and dinitronaphthalene, soluble polymethyl methacrylate, soluble polystyrene, soluble styrene-butadiene copolymer, soluble nitrile butadiene copolymer, coal tar, petrol and wood tar, and mixtures, eutectic mixtures and melts thereof;
    wherein the particle size of the dispersed solid explosive is in the range of from 1 nm to 1000 $\mu$m.

7. The method according to claim 1, 2 or 3, **wherein** the detonable liquid-based mixture is a suspension, consisting of at least one liquid explosive and at least one solid organic non-explosive compound, dispersed in said liquid explosive;

wherein said liquid explosive is selected from the group comprising trinitroxypropane, nitromethane and tetranitromethane, methyl nitrate, ethyl nitrate, isopropyl nitrate, butanetriol trinitrate, ethylene glycol dinitrate, trimethylolpropane trinitrate, diethanolnitramine dinitrate, dinitrotoluene and trinitrotoluene, trinitronaphthalene, nitroguanidine, nitrourea, picric acid, ammonium picrate, trinitroanisole, trinitrobenzene, hexanitrodiphenylamine, trinitrophenylmethylnitramine, pentaerythritol tetranitrate, hexanitrostilbene, cyclotrimethylene trinitramine, nitrocellulose, cyclotetramethylene tetranitramine, dimethyl dinitrobutane, and mixtures, eutectic mixtures and melts thereof;

and wherein said solid organic non-explosive compound is selected from the group comprising naphthalene, phenanthrene, anthracene, benzoic acid, benzophenone, melamine, paraffin, stearin, bitumen, carbohydrates, mononitrotoluene, nitronaphthalene and dinitronaphthalene, polymethyl methacrylate, polystyrene, styrene-butadiene copolymer, nitrile butadiene copolymer;

wherein the particle size of the dispersed solid organic non-explosive compound is in the range of from 1 nm to 1000 $\mu$m.

8. The method according to claim 6 or 7, **wherein** the detonable liquid-based mixture is selected from a suspension of ammonium picrate and cyclotetramethylene tetranitramine in glycerol; a suspension of melamine in nitromethane or naphthalene in mixture of isopropyl nitrate with trinitroxypropane; a suspension of cyclotrimethylene trinitramine and mononitrotoluene in acetyltributylcitrate; a suspension of cyclotetramethylene tetranitramine and dimethyl dinitrobutane in isopentanol; a suspension of pentaerythritol tetranitrate, trinitrotoluene, and mononitrotoluene in nitrobenzene and nitromethane; and a suspension of pentaerythritol tetranitrate and mononitrotoluene in tetraethylene glycol monooctyl ether.

9. The method for detonation synthesis of diamond particles according to claim 1 to 8, wherein the diamond particles have a pre-determined size range, **characterized in that** it comprises the following steps:

i-a) providing a detonable liquid-based mixture, comprising at least one explosive and at least one non-explosive organic compound, wherein the mixture is stoichiometrically adjusted to have a negative oxygen balance; and wherein said detonable liquid-based mixture is selected from a detonable solution, and a detonable suspension;

i-b) determining the necessary thermodynamic conditions of the detonation process, determining the content of the liquid-based detonable mixture, determining the proportions of the liquid-based detonable mixture by the weight ratio of the explosive and non-explosive organic compound, and, if the detonable liquid-based mixture is a suspension, then determining also the particle size of the solid dispersed component, determining the necessary oxygen content of the organic non-explosive compounds, to provide the diamond particles having a pre-determined size range;

ii) detonating said detonable liquid-based mixture in a processing container;

iii) separating the diamond product.

10. The method according to claim 9, **wherein** the detonable liquid-based mixture is a suspension, and the dispersed solid phase has particle size in the range of from 1 nm to 250 $\mu$m.

11. The method according to any one of the preceding claims, **wherein** the detonable liquid-based mixture further comprises graphite and/or soot;

wherein the amount of graphite and/or soot in the detonable liquid-based mixture is in the range of from 0.001 to 25 wt%, based on the total mass of the detonable liquid-based mixture; preferably the graphite and/or soot has particle size in the range of from 20 to 100 $\mu$m.

12. The method according to any one of the preceding claims, **wherein** the detonable liquid-based mixture further contains at least one solid phase elemental additive, selected from the group consisting of B, Si, P, S, Ga, Ge, As, Se, In, Sn, Sb and Te,

wherein the particle size of the dispersed solid phase elemental additive is in the range of from 1 nm to 1000 $\mu$m; preferably the amount of said elemental additive is in the range of from 0.001 to 5 wt%, based on the total mass of the detonable liquid-based mixture.

13. The method according to any one of the preceding claims, **wherein** the step ii) of detonating said detonable liquid-based mixture is performed by sealing the detonable liquid-based mixture together with an electric or non-electric detonator, optionally enhanced with a booster, in a hermetically sealed sleeve, preferably a polyethylene sleeve;

immersing the sealed sleeve in a processing receptacle filled with a reactive liquid; and detonating it in the processing container.

14. The method according to claim 13, **wherein** the reactive liquid is selected from the group consisting of aqueous solutions of carboxylic acids containing 2 to 5 carbon atoms, preferably acetic, propionic, lactic or citric acids, and preferably the concentration of the acid in the aqueous solution is in the range of from 0.1 to 5 wt%.

15. The method according to claims 13 or 14, **wherein** in step ii), prior to immersing the sealed sleeve in the processing receptacle filled with the reactive liquid, the sealed sleeve is placed in a second hermetically sealed sleeve, preferably polyethylene sleeve, wherein the second hermetically sealed sleeve contains inside at least one elemental additive selected from the group consisting of B, Si, P, S, Ga, Ge, As, Se, In, Sn, Sb and Te; wherein the particle size of the elemental additive is in the range of from 1 nm to 1000 $\mu$m;
preferably, the amount of said elemental additive is in the range of from 0.001 to 5 wt%, based on the total mass of the detonable liquid-based mixture.

Fig.1

Fig.2

Fig.3

Fig.4

Fig.5

Europäisches
Patentamt

European
Patent Office

Office européen
des brevets

# EUROPEAN SEARCH REPORT

**Application Number**

EP 25 15 3867

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/254884 A1 (SHENDEROVA OLGA [US]) 7 October 2010 (2010-10-07) * claims 1, 4, 13 * * paragraphs [0015], [0031] * * figure 1 * * the whole document * | 1-15 | INV. C01B32/25 C01B32/26 ADD. B01J3/08 |
| X | US 4 483 836 A (ADADUROV GENNADY A [SU] ET AL) 20 November 1984 (1984-11-20) * examples 2, 10, 13-14, 16-17, 21, 27, 37, 39 * * claims 1-9 * * the whole document * | 1-15 | |
| A | US 10 294 162 B2 (KOBE STEEL LTD [JP]; AIST [JP] ET AL.) 21 May 2019 (2019-05-21) * the whole document * | 1-15 | |

| | TECHNICAL FIELDS SEARCHED (IPC) |
|---|---|
| | C01B B01J |

The present search report has been drawn up for all claims

| Place of search | Date of completion of the search | Examiner |
|---|---|---|
| The Hague | 20 June 2025 | Eren, Hamit |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EP 4 782 400 A1

## ANNEX TO THE EUROPEAN SEARCH REPORT
## ON EUROPEAN PATENT APPLICATION NO.

EP 25 15 3867

This annex lists the patent family members relating to the patent documents cited in the above-mentioned European search report.
The members are as contained in the European Patent Office EDP file on
The European Patent Office is in no way liable for these particulars which are merely given for the purpose of information.

20-06-2025

| Patent document cited in search report | | Publication date | Patent family member(s) | | Publication date |
|---|---|---|---|---|---|
| US 2010254884 | A1 | 07-10-2010 | NONE | | |
| US 4483836 | A | 20-11-1984 | AT | 386592 B | 12-09-1988 |
| | | | DE | 3050564 A1 | 23-09-1982 |
| | | | GB | 2090239 A | 07-07-1982 |
| | | | JP | S6259623 B2 | 11-12-1987 |
| | | | JP | S57501080 A | 24-06-1982 |
| | | | US | 4483836 A | 20-11-1984 |
| | | | WO | 8200458 A1 | 18-02-1982 |
| US 10294162 | B2 | 21-05-2019 | EP | 3088357 A1 | 02-11-2016 |
| | | | JP | 5973987 B2 | 23-08-2016 |
| | | | JP | 2015127279 A | 09-07-2015 |
| | | | KR | 20160088423 A | 25-07-2016 |
| | | | RU | 2634008 C1 | 23-10-2017 |
| | | | UA | 114771 C2 | 25-07-2017 |
| | | | US | 2016318809 A1 | 03-11-2016 |
| | | | WO | 2015098982 A1 | 02-07-2015 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013127967 A1

- EP 3150552 A1

**Non-patent literature cited in the description**

- **STEHLIK, S.** ; **VARGA, M.** ; **LEDINSKY, M. et al.** High-yield fabrication and properties of 1.4 nm nanodiamonds with narrow size distribution. *Scientific Reports*, 2016, vol. 6, 38419, https://doi.org/10.1038/srep38419

- **V. PICHOT** ; **B. RISSE** ; **F. SCHNELL et al.** , Understanding ultrafine nanodiamond formation using nanostructured explosives. *Scientific Reports*, 2013, vol. 3, 2159, https://doi.org/10.1038/srep02159